# EUROPÄISCHE PATENTSCHRIFT

(11) **EP 1 243 227 B1**
(45) Veröffentlichungstag und Bekanntmachung des Hinweises auf die Patenterteilung: **30.08.2006**
(21) Anmeldenummer: 02005338.5
(22) Anmeldetag: 14.03.2002
(51) Int. Cl.: A61C 3/025, A61C 1/00, B24C 7/00

(54) **Düsenstück für ein dentales Abrasivstrahlgerät**
Nozzle piece for a dental abrasive blasting device
Tête de buse pour un appareil dentaire à jet abrasif

(30) Priorität: 23.03.2001 DE 10114324
(43) Veröffentlichungstag der Anmeldung: 25.09.2002
(73) Patentinhaber: Ferton Holding SA, 2800 Delémont (CH)
(72) Erfinder: Sierro, Alexandre, 1298 Céligny (CH); Beerstecher, Lutz, 1277 Borex (CH)
(74) Vertreter: Müller, Frank Peter

(56) Entgegenhaltungen:
- EP-A- 0 248 638
- DE-U- 7 921 732
- US-A- 5 765 759

## Beschreibung

Die Erfindung bezieht sich auf ein Düsenstück für ein dentales Abrasivstrahlgerät, das für eine auswechselbare Anordnung an dem Kopfende eines Handstückes vorgesehen ist und eine innere Austrittsdüse für den Austritt eines gasförmigen Trägermediums im Gemisch mit einem Dentalpulver sowie eine konzentrisch angeordnete äußere Austrittsdüse für den Austritt eine Fluids aufweist, wobei die beiden Austrittsdüsen an zwei getrennten Anschlussleitungen eines an dem Kopfende des Handstückes festlegbaren Griffteils angeschlossen und mit einer gemeinsamen Mittelachse ihrer Austrittsquerschnitte unter einem Austrittswinkel von 60° oder mehr zu einer definierten Längsachse des Handstückes schräg ausgerichtet sind. Das Griffteil ist mit einem derart definierten Kurvenverlaufs einer geschlossenen Oberfläche versehen, dass die Austrittsquerschnitte der beiden Austrittsdüsen nahe einer mit der Längsachse des Handstückes übereinstimmenden Sichtebene angeordnet sind, wobei die beiden Anschlussleitungen des Griffteils parallel zueinander verlaufen und unter einem von 90° abweichenden Winkel zu der Längsachse des Handstückes ausgerichtet sind und wobei ihre den Austrittswinkel der Austrittsdüsen festlegenden Schnittstellen mit der gemeinsamen Mittelachse der Austrittsdüsen außerhalb dieser Sichtebene liegen.

Düsenstücke für dentale Abrasivstrahlgeräte der vorgenannten Art sind in zahlreichen Ausführungen bekannt und bsp. vorbeschrieben in den US Patentschriften 4 174 571, 4 412 402 und 4 676 749 zur Anordnung an einem Handstück, das einen Anschluß an einen separat vorgesehen Pulverbehälter aufweist. Das Düsenstück ist dabei an den Enden von zwei Rohrstücken angeordnet, die unmittelbar mit den beiden Austrittsdüsen verbunden und an einem Kopfstück eines rohrförmigen Handgriffes befestigt sind. Die Rohrstücke sind in Bezug auf eine definierte Längsachse dieses Handgriffes achsparallel ausgerichtet und weisen einen geradlinigen oder auch abgewinkelten bzw. gekrümmten Verlauf hin zu dem Düsenstück auf. Mit diesem unterschiedlichen Verlauf der beiden Rohrstücke werden bei den verschiedenen Handstücken verschiedene Austrittswinkel für die Austrittsquerschnitte der beiden Austrittsdüsen bezweckt, um ohne eine nähere Berücksichtigung der Sichtverhältnisse in Bezug auf die für den Austritt des Arbeitsstrahls maßgeblichen Austrittsquerschnitte der beiden Austrittsdüsen bei einer Zahnbehandlung eine möglichst optimale Handhabung des Handstückes für eine sichere Führung des Arbeitsstrahls über die Präparationsfläche eines Zahnes zu erhalten. Aus der EP 0 248 638 A2 ist ein Düsenstück für ein dentales Abrasivstrahlgerät bekannt, welches eine innere Austrittsdüse für den Austritt von Luft und eine konzentrisch dazu angeordnete äußere Austrittsdüse zum Austritt einer Flüssigkeit aufweist, welche mit Abrasivteilchen gemischt ist. Die beiden Austrittsdüsen sind an zwei getrennte Anschlussleitungen eines am Kopfende des Handstückes festlegbaren Griffteils angeschlossen. Die gemeinsame Mittelachse der Austrittsdüsen bildet zu einer definierten Längsachse des Handstückes einen Austrittswinkel von mehr als 60°.

Der Erfindung liegt die Aufgabe zugrunde, ein neues Düsenstück der eingangs genannten Art bereitzustellen, für welches neben einer einfachen Fertigungsmöglichkeit weitere Optimierungen für die Handhabung des Handstückes erhalten werden können.

Diese Aufgabe wird erfindungsgemäß bei einem Düsenstück der eingangs genannten Art dadurch gelöst, dass im Anschlussbereich der inneren Austrittsdüse an die zugeordnete Anschlussleitung des Griffteils eine für eine verlustarme Richtungsänderung des über diese Anschlussleitung herangeführten gasförmigen Trägermediums im Gemisch mit einem abrasiven Dentalpulver eingerichtete Prallfläche vorgesehen ist, und dass die Prallfläche mit einem schräg angeschnittenen und in die zugeordnete Anschlussleitung des Griffteils vorstehenden Rohrende eines die innere Austrittsdüse komplettierenden Auslassrohres ausgebildet ist.

Durch das schräg angeschnittene Rohrende des Auslassrohres wird ein reibungsarmer Transport des Trägermediums im Gemisch mit einem abbrasiven Dentalpulver gewährleistet. Darüber hinaus kann das vorstehende Rohrende auch dazu genutzt werden, das Auslassrohr im Düsenstück zu fixieren.

Bei einem Düsenstück der erfindungsgemäßen Ausbildung wird durch den näher definierten Kurvenverlauf der geschlossenen Oberfläche des Griffteils eine kurze Baulänge für das Handstück erhalten, so dass damit die Sicht auf das eigentliche Präparationsfeld der Zähne wesentlich verbessert werden kann. Der Kurvenverlauf kann unter ergonomischen Gesichtspunkten gestaltet und insbesondere dann für verschiedenen Ausführungsformen des Handstücks zur Verfügung gestellt werden, wenn das Griffteil des Düsenstückes als ein aus Metall oder einem Kunststoff bestehendes Spritzgussteil hergestellt wird. Wenn diese Herstellung realisiert wird, dann kann das Griffteil auf einfache Weise auch mit Bohrungen für die beiden Anschlußleitungen und die beiden Austrittsdüsen versehen werden, wobei dann bevorzugt werden sollte, daß wenigstens die Austrittsdüse für das von dem gasförmigen Trägermedium mitgeführte Dentalpulver noch mit einem in die zugeordnete Bohrung eingesetzten Auslaßrohr komplettiert wird. Es wird damit ein Düsenstück erhalten, das auch besonders einfach zu reinigen ist, verbunden mit dem Vorteil, daß für das Spritzgußteil zur Bereitstellung einer auswechselbaren Anordnung an dem Handstück unterschiedliche Austrittswinkel für den Arbeitsstrahl vorgegeben werden können, um so die Sichtverhältnisse in Bezug auf das Präparationsfeld der jeweils zu behandelnden Zähne noch weiter zu optimieren.

Weitere vorteilhafte und zweckmäßige Ausbildungen des erfindungsgemäßen Düsenstückes sind mit den einzelnen Patentansprüchen angegeben.

Ein Ausführungsbeispiel des erfindungsgemäßen Düsenstückes ist in der Zeichnung schematisch dargestellt und wird nachfolgend näher erläutert. Es zeigt
- Fig. 1: einen Längsschnitt durch das Kopfende eines Handstückes, an welchem ein Düsenstück gemäß der Erfindung auswechselbar angeordnet ist,
- Fig. 2: eine Detailansicht der in Fig. 1 gezeigten Einzelheit X,
- Fig. 3: die in Fig. 1 gezeigte Einzelheit X bei einer anderen Ausführungsform des Düsenstückes und
- Fig. 4: eine Perspektivansicht der in Fig. 1 mit einem Längsschnitt gezeigten Einheit, die mit ihrer funktionellen Baugröße im Maßstab 1:1 dargestellt ist.

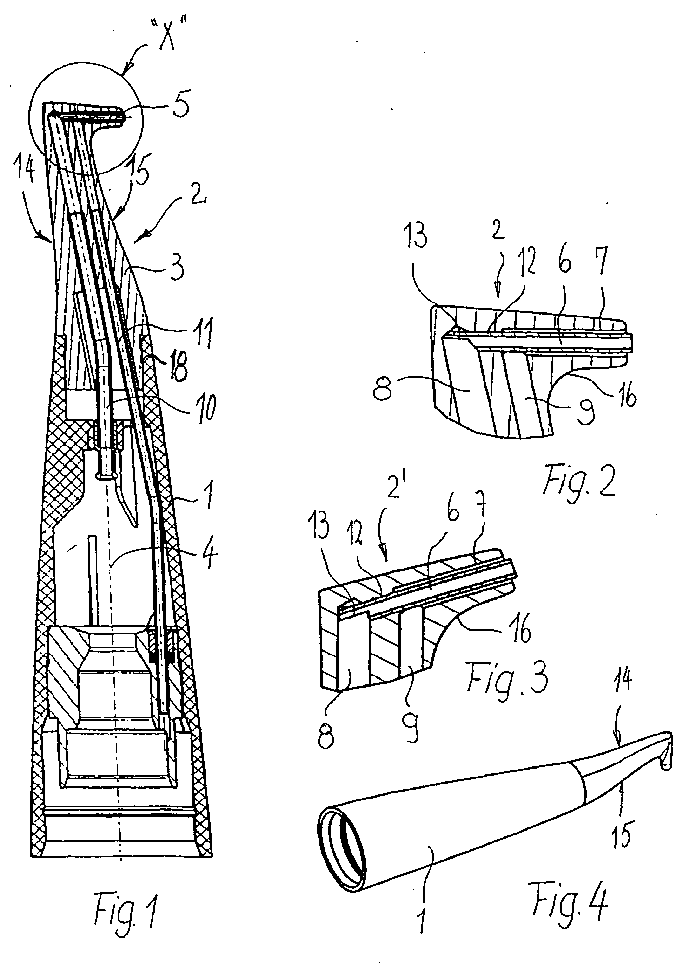

In Fig. 1 ist das mit einer Griffhülse 1 gezeigte Kopfende eines Handstückes dargestellt, mit dem bei einem dentalen Abrasivstrahlgerät eine Zahnbehandlungdurchgeführt wird. Die Zahnbehandlung erfolgt mit einem Arbeitsstrahl, der an einer Düsenanordnung eines Düsenstückes 2 austritt, welches an der Griffhülse 1 auswechselbar angeordnet ist.

Das Düsenstück 2 ist als ein aus Metall oder einem Kunststoff bestehendes Spritzgußteil hergestellt und weist ein Griffteil 3 auf, dessen geschlossene Oberfläche mit einem bestimmungsgemäßen Kurvenverlauf in Bezug hauptsächlich auf eine definierte Längsachse 4 des Handstückes sowie in Bezug auf eine Mittelachse 5 einer Düsenanordnung des Düsenstückes 2 versehen ist. Mit der Mittelachse wird der auf die definierte Längsachse 4 bezogene Austrittswinkel eines Arbeitsstrahls festgelegt.

Die Düsenanordnung des Düsenstückes 2 besteht ausweislich der Detailansicht gemäß Fig. 2 aus einer inneren Austrittsdüse 6 für den Austritt eines gasförmigen Trägermediums, nämlich in der Regel Luft, im Gemisch mit einem abrasiven Dentalpulver sowie einer konzentrisch angeordneten äußeren Austrittsdüse 7 für den Austritt eines Fluids, nämlich in der Regel Wasser. Der Arbeitsstrahl ist daher mit einem über eine erste Anschlußleitung 8 zugeführten Luft-Pulver-Gemisch und mit einem über eine zweite Anschlußleitung 9 zugeführten Wasserstrahl ausgebildet, der den über die innere Austrittsdüse 6 austretenden Luft-Pulver-Strahl nach seinem Austritt an der äußeren Austrittsdüse 7 umgibt. Der aus diesen Teilstrahlen zusammengesetzte Arbeitsstrahl wird bei einer Zahnbehandlung mit einer Führung durch das Handstück gegen das Präparationsfeld eines Zahnes ausgerichtet.

Die beiden Anschlußleitungen 8 und 9 der Austrittsdüsen 6 und 7 sind an dem Griffteil 3 des Düsenstückes 2 als zueinander parallel verlaufende Stufenbohrungen ausgebildet, die unter einem von 90° abweichenden Winkel zu der Längsachse 4 ausgerichtet sind. Der an dem proximalen Ende befindliche größere Durchmesser dieser Stufenbohrungen ist jeweils zum Einstecken einer Verbindungsleitung 10 bzw. 11 angepaßt. An diese beiden Verbindungsleitungen sind die Anschlußleitungen des Handstückes für die Zuführung des Luft-Pulver-Gemisches und von Wasser angeschlossen. Auch die beiden Austrittsdüsen 6 und 7 des Düsenstückes 2 sind als Bohrungen ausgeführt. Die innere Austrittsdüse 6 ist mit einem Auslaßrohr 12 komplettiert, das mit einem schräg angeschnittenen Rohrende 13 in die Bohrung der Anschlußleitung 8 vorsteht. Durch das Auslaßrohr 12 wird für die innere Austrittsdüse 6 ein Austrittsquerschnitt erhalten, der kleiner ist als der Querschnitt der Anschlußleitung 8 an der Schnittstelle, in welcher sich das schräg angeschnittene Rohrende 13 befindet, An dieser Schnittstelle wird daher eine verhältnismäßig verlustarme Richtungsänderung des Luft-Pulver-Gemisches aus der Anschlußleitung 8 hin zu dem Auslaßrohr 12 erhalten. Das schräg angeschnittene Rohrende 13 wirkt für diese Richtungsänderung als eine Prallfläche, die eine sanfte Umlenkung des in der Anschlußleitung 8 herangeführten Luft-Pulver-Gemisches erreichen läßt, und zwar mehr oder weniger unabhängig von dem Austrittswinkel, welcher mit der gemeinsamen Mittelachse 5 der beiden Austrittsdüsen 6 und 7 für den Arbeitsstrahl in der Relation zu der Längsachse 4 des Handstückes vorgegeben ist. Gemäß der Darstellung in Fig. 2 hat dieser Austrittswinkel eine Größe von etwa 90°, während er eine Größe von etwa 120° bei dem Düsenstück 2' gemäß der Darstellung in Fig. 3 aufweist.

Der für die geschlossene Oberfläche des Griffteils 3 vorgegebene Kurvenverlauf kann für das Düsenstück 2 derart definiert werden, daß die Austrittsquerschnitte der beiden Austrittsdüsen 6 und 7 nahe einer mit der Längsachse 4 des Handstückes übereinstimmenden Sichtebene angeordnet sind. In Bezug auf diese Sichtebene befinden sich gleichzeitig die Schnittstellen der beiden parallel zueinander verlaufenden Anschlußleitungen 8 und 9 mit der gemeinsamen Mittelachse 5 der beiden Austrittsdüsen 6 und 7 an zwei Orten außerhalb dieser Sichtebene, mit welcher bei der Führung des Handstückes während einer Zahnbehandlung das Präparationsfeld eines Zahnes eingesehen wird. Um für die Zahnbehandlung optimale Sichtverhältnisse zu erhalten, ist daher die geschlossene Oberfläche des Griffteils an einer oberen Sichtfläche 14 mit einem etwa konkav gekrümmten Kurvenverlauf und an einer unteren Sichtfläche 15 mit einem etwa konvex gekrümmten Kurvenverlauf versehen, wobei die untere Sichtfläche 15 zu dem Austrittquerschnitt der beiden Austrittsdüsen hin noch in einer konkav gekrümmten Kurve 16 ausläuft. Mit der konkav gekrümmten Kurve 16 wird gleichzeitig eine Anpassung an den Austrittswinkel der beiden Austrittsdüsen 6 und 7 erhalten. Aus der Gegenüberstellung der Fig. 2 und 3 ist ableitbar, daß diese konkav auslaufende Kurve 16 bei einem größeren Austrittswinkel relativ flacher und auch relativ weiter verläuft als bei einem kleineren Austrittswinkel. Gleichzeitig ist aus der Darstellung der Fig. 4 ableitbar, daß mit dem etwa konkav gekrümmten Kurvenverlauf der oberen Sichtfläche 14 eine ergonomisch gestaltete Fingerauflagefläche erhalten wird, mit welcher eine verbesserte Führung für das Handstück und damit für den Arbeitsstrahl erreichbar ist, der gegen ein Präparationsfeld eines Zahnes ausgerichtet wird. Der gekrümmte Kurvenverlauf der beiden Sichtflächen der geschlossenen Oberfläche des Griffteils 3 ergibt auch eine relativ kurze Baulänge und kleine Bauhöhe für das gesamte Düsenstück 2 und garantiert deshalb eine optimale Sichtverbindung mit dem Präparationsfeld eines Zahnes.

Für die auswechselbare Anordnung des Düsenstückes 2 an der Griffhülse 1 kann eine Nut-Feder-Verbindung 18 vorgesehen sein, die eine Drehsicherung für die Griffhülse ergibt und derart ausgebildet ist, daß für jedes ausgewechselte Düsenstück der mit der Mittelachse 5 der beiden Austrittsdüsen 6 und 7 vorgegebene Austrittswinkel in Bezug auf die Längsachse 4 des Handstückes sicher und unverwechselbar eingehalten werden kann. Anstelle einer Nut-Feder-Verbindung können auch anders ausgebildete Drehsicherungen vorgesehen werden.

## Patentansprüche

1. Düsenstück für ein dentales Abrasivstrahlgerät, das für eine auswechselbare Anordnung an dem Kopfende eines Handstückes (1) vorgesehen ist und eine innere Austrittsdüse (6) für den Austritt eines gasförmigen Trägermediums im Gemisch mit einem abrasiven Dentalpulver sowie eine konzentrisch angeordnete äußere Austrittsdüse (7) für den Austritt eines Fluids aufweist, wobei die beiden Austrittsdüsen (6, 7) an zwei getrennten Anschlussleitungen (8, 9) eines an dem Kopfende des Handstückes (1) festlegbaren Griffteils (3) angeschlossen und mit einer gemeinsamen Mittelachse (5) ihrer Austrittsquerschnitte zu einer definierten Längsachse (4) des Handstückes unter einem Austrittswinkel von 60° oder mehr ausgerichtet sind, wobei das Griffteil (3) des Düsenstücks (2) mit einem derart definierten Kurvenlauf seiner geschlossenen Oberfläche versehen ist, dass die Austrittsquerschnitte der beiden Austrittsdüsen (6, 7) nahe einer mit der definierten Längsachse (4) des Handstückes (1) übereinstimmenden Sichtebene angeordnet sind, wobei die beiden Anschlussleitungen (8, 9) des Griffteils parallel zueinander verlaufen und unter einem von 90° abweichenden Winkel zu der definierten Längsachse (4) des Handstückes (1) ausgerichtet sind und wobei ihre den Austrittswinkel der Düsen (6, 7) festlegenden Schnittstellen mit der gemeinsamen Mittelachse (5) der Austrittsdüsen außerhalb dieser Sichtebene liegen,
**dadurch gekennzeichnet, dass** im Anschlussbereich der inneren Austrittsdüse (6) an die zugeordnete Anschlussleitung (8) des Griffteils (3) eine für eine verlustarme Richtungsänderung des über diese Anschlussleitung herangeführten gasförmigen Trägermediums im Gemisch mit einem abrasiven Dentalpulver eingerichtete Prallfläche (13) vorgesehen ist, und dass die Prallfläche mit einem schräg angeschnittenen und in die zugeordnete Anschlussleitung (8) des Griffteils (3) vorstehenden Rohrende (13) eines die innere Austrittsdüse (6) komplettierenden Auslassrohres (12) ausgebildet ist.

2. Düsenstück nach Anspruch 1, **dadurch gekennzeichnet, dass** das Griffteil (3) des Düsenstückes (2) als ein aus Metall oder einem Kunststoff bestehendes Spritzgussteil hergestellt ist.

3. Düsenstück nach Anspruch 1 oder 2, **dadurch gekennzeichnet, dass** die beiden Anschlussleitungen (8, 9) des Griffteils und die beiden Austrittsdüsen (6, 7) des Düsenstücks (2) mit Bohrungen ausgebildet sind, wobei wenigstens die innere Austrittsdüse (6) mit einem in die zugeordnete Bohrung eingesetzten Auslassrohr (12) komplettiert ist, das mit einem Austrittsquerschnitt über den Austrittsquerschnitt größeren Durchmesser der äußeren Austrittsdüse (7) nach außen vorsteht.

4. Düsenstück nach einem der Ansprüche 1 bis 3, **dadurch gekennzeichnet, dass** die Bohrungen der beiden Anschlussleitungen (8, 9) des Griffteils (3) als Stufenbohrungen mit einem an dem proximalen Ende der Bohrungen jeweils größeren und zum Einstecken einer Verbindungsleitung (10, 11) des Handstückes (1) angepassten Durchmesser ausgebildet sind.

5. Düsenstück nach einem der Ansprüche 1 bis 4, **dadurch gekennzeichnet, dass** die Anschlussleitung (8) des Griffteils (3) an die innere Austrittsdüse (6) stromaufwärts von ihrer Schnittstelle mit der gemeinsamen Mittelachse (5) der beiden Austrittsdüsen (6, 7) einen gegenüber dem Austrittsquerschnitt der inneren Austrittsdüse (6) etwas größeren Querschnitt aufweist.

6. Düsenstück nach einem der Ansprüche 1 bis 5, **dadurch gekennzeichnet, dass** das Griffteil (3) des Düsenstückes (2) für eine Steckverbindung mit dem Kopfende des Handstückes (1) ausgebildet und durch eine Drehsicherung (18) gesichert ist, welche eine Beibehaltung der vorgegebenen Sichtebene bei unterschiedlich ausgebildeten Austrittswinkeln der beiden Austrittsdüsen (6, 7) sicherstellt.

7. Düsenstück nach Anspruch 6, **dadurch gekennzeichnet, dass** die Drehsicherung als eine Nut-Feder-Verbindung (18) des Griffteils (3) mit dem Kopfende des Handstückes (1) ausgebildet ist.

8. Düsenstück nach einem der Ansprüche 1 bis 7, **dadurch gekennzeichnet, dass** die geschlossene Oberfläche des Griffteils (3) an einer oberen Sichtfläche (14) einen konkav gekrümmten Kurvenverlauf und an einer unteren Sichtfläche (15) einen konvex gekrümmten Kurvenverlauf aufweist, der zu dem Austrittsquerschnitt der beiden Austrittsdüsen (6, 7) hin in einer konkav gekrümmten Kurve (16) ausläuft.

## Claims

1. Nozzle piece for a dental abrasive blast tool, which is provided for exchangeable mounting on the head end of a handset (1) and has an inner discharge nozzle (6) for the discharge of a gaseous carrier medium mixed with a dental powder and a concentrically mounted outer discharge nozzle (7) for the discharge of a fluid, wherein the two discharge nozzles (6, 7) are connected to two separate connecting lines (8, 9) of a handle part (3) fixable to the head end of the handset (1) and are oriented obliquely with a common centre line (5) of their discharge cross-sections at a discharge angle of 60° or more to a defined longitudinal axis (4) of the handset, wherein the handle part (3) of the nozzle piece (2) is provided with a curved progression of its closed surface so defined that the discharge cross-sections of the two discharge nozzles (6, 7) are disposed close to a visual plane coinciding with the defined longitudinal axis (4) of the handset (1), wherein the two connecting lines (8, 9) of the handle part extend parallel to one another and are oriented at an angle deviating from 90° relative to the defined longitudinal axis (4) of the handset (1), and wherein their points of intersection fixing the discharge angle of the nozzles (6, 7) lie with the common centre line (5) of the discharge nozzles outside this visual plane,
**characterised in that** in the connecting region of the inner discharge nozzle (6) to the associated connecting line (8) of the handle part (3), a baffle face (13) is provided arranged for the low-loss change in direction of the gaseous carrier medium mixed with an abrasive dental powder brought by this connecting line, and **in that** the baffle face is formed with an obliquely cut tube end (13) - projecting into the associated connecting line (8) of the handle part (3) - of an outlet tube (12) complementing the inner discharge nozzle (6).

2. Nozzle piece according to claim 1, **characterised in that** the handle part (3) of the nozzle piece (2) is manufactured from metal or a plastics injection-moulded part.

3. Nozzle piece according to claim 1 or 2, **characterised in that** the two connecting lines (8, 9) of the handle part and the two discharge nozzles (6, 7) of the nozzle piece (2) are formed with bores, wherein at least the inner discharge nozzle (6) is complemented by an outlet tube (12) which is inserted into the associated bore and which projects on the exterior with a discharge cross-section beyond the discharge cross-section of larger diameter of the outer discharge nozzle (7).

4. Nozzle piece according to one of claims 1 to 3, **characterised in that** the bores of the two connecting lines (8, 9) of the handle part (3) are formed as stepped bores with a diameter which is respectively larger at the proximal end of the bores and is adapted for insertion of a connecting line (10, 11) of the handset (1).

5. Nozzle piece according to one of claims 1 to 4, **characterised in that** the connecting line (8) of the handle part (3) has at the inner discharge nozzle (6) upstream of its point of intersection with the common centre line (5) of the two discharge nozzles (6, 7) a slightly larger cross-section compared to the discharge cross-section of the inner discharge nozzle (6).

6. Nozzle piece according to one of claims 1 to 5, **characterised in that** the handle part (3) of the nozzle piece (2) is formed for a plug-in connection with the head end of the handset (1) and is secured by a rotation-locking device (18), which ensures retention of the specified visual plane in the case of differently formed discharge angles of the two discharge nozzles (6, 7).

7. Nozzle piece according to claim 6, **characterised in that** the rotation-locking device is formed as a tongue-and-groove connection (18) of the handle part (3) to the head end of the handset (1).

8. Nozzle piece according to one of claims 1 to 7, **characterised in that** the closed surface of the handle part (3) has at an upper visible surface (14) a concavely curved curvature and at a lower visible surface (15) a convexly curved curvature, which extends in a concave curve (16) towards the discharge cross-section of the two discharge nozzles (6, 7).

## Revendications

1. Pièce de buse pour un outil dentaire à pulvérisation abrasive, lequel est prévu sur l'extrémité Tête d'une pièce à main (1) en vue d'un montage échangeable, et qui possède une buse de décharge interne (6) pour la décharge d'un milieu véhiculeur en phase gazeuse mélangé à une poudre dentaire abrasive ainsi qu'une buse de décharge externe (7) agencée de façon concentrique pour la décharge d'un fluide, cas dans lequel les deux buses de décharge (6, 7) sont raccordées à deux lignes de raccordement séparées (8, 9) d'une partie Poignée (3) apte à être fixée sur l'extrémité Tête de la pièce à main (1), et sont orientées dans le plan oblique avec un axe commun (5) de leurs coupes transversales de décharge suivant un angle de décharge de 60° ou davantage par rapport à un axe longitudinal défini (4) de la pièce à main, cas dans lequel la partie Poignée (3) de la pièce de buse (2) est dotée d'un contour incurvé de sa surface fermée ayant été défini de sorte que les coupes transversales de décharge des deux buses de décharge (6, 7) soient disposées à proximité d'un plan visuel lequel coïncide avec l'axe longitudinal défini (4) de la pièce à main (1), cas dans lequel les deux lignes de raccordement (8, 9) de la partie Poignée s'étendent dans un plan parallèle l'une par rapport à l'autre et sont orientées suivant un angle qui dévie de 90° par rapport à l'axe longitudinal défini (4) de la pièce à main (1), et cas dans lequel leurs points d'intersection établissant l'angle de décharge des buses (6, 7) se trouvent, avec l'axe commun (5) des buses de décharge, en dehors de ce plan visuel,
**caractérisée en ce que**, dans la région de raccordement de la buse de décharge interne (6) vers la ligne de raccordement associée (8) de la partie Poignée (3), une face de déflexion (13) a été prévue laquelle est agencée pour procurer un changement de direction à faible perte du milieu véhiculeur en phase gazeuse mélangé à une poudre dentaire abrasive amené via cette ligne de raccordement, et **en ce que** la face de déflexion est formée avec une extrémité de tube coupée dans le plan oblique (13) - se projetant dans la ligne de raccordement associée (8) de la partie Poignée (3) - d'un tube de sortie (12) lequel est complémentaire de la buse de décharge interne (6) .

2. Pièce de buse, selon la revendication 1, **caractérisée en ce que** la partie Poignée (3) de la pièce de buse (2) est réalisée en métal ou bien sous la forme d'un poste en plastique moulé par injection.

3. Pièce de buse, selon la revendication 1 ou 2, **caractérisée en ce que** les deux lignes de raccordement (8, 9) de la partie Poignée et les deux buses de décharge (6, 7) de la pièce de buse (2) sont réalisées avec des alésages, cas dans lequel la buse de décharge interne (6) au moins est complétée d'un tube de sortie (12) lequel est inséré dans l'alésage associé et qui se projette vers l'extérieur alors qu'une coupe transversale de décharge dépasse la coupe transversale de décharge à grand diamètre de la buse de décharge externe (7).

4. Pièce de buse, selon l'une quelconque des revendications 1 à 3, **caractérisée en ce que** les alésages des deux lignes de raccordement (8, 9) de la partie Poignée (3) sont formés en tant qu'alésages à gradins avec un diamètre qui est respectivement plus grand, au niveau de l'extrémité proximale des alésages, et est adapté en vue de l'insertion d'une ligne de raccordement (10, 11) de la pièce à main (1).

5. Pièce de buse, selon l'une quelconque des revendications 1 à 4, **caractérisée en ce que** la ligne de raccordement (8) de la partie Poignée (3) comporte - au niveau de la buse de décharge interne (6) en amont de son point d'intersection avec l'axe commun (5) des deux buses de décharge (6, 7) - une coupe transversale légèrement plus grande en comparaison avec la coupe transversale de décharge de la buse de décharge interne (6).

6. Pièce de buse, selon l'une quelconque des revendications 1 à 5, **caractérisée en ce que** la partie Poignée (3) de la pièce de buse (2) est réalisée en vue d'une connexion enfichable avec l'extrémité Tête de la pièce à main (1) et est assujettie par un dispositif de verrouillage par rotation (18), et qui permet de garantir la rétention du plan visuel spécifié pour des angles de décharge de forme différente sur les deux buses de décharge (6, 7).

7. Pièce de buse, selon la revendication 6, **caractérisée en ce que** le dispositif de verrouillage par rotation est réalisé sous la forme d'un raccord à rainure et languette (18) de la partie Poignée (3) avec l'extrémité Tête de la pièce à main (1).

8. Pièce de buse, selon l'une quelconque des revendications 1 à 7, **caractérisée en ce que** la surface fermée de la partie Poignée (3) comporte une ligne incurvée dans le plan concave au niveau d'une zone visible supérieure (14), et une ligne incurvée dans le plan convexe au niveau d'une zone visible inférieure (15), qui se prolonge suivant une ligne incurvée dans le plan concave (16) vers la coupe transversale de décharge des deux buses de décharge (6, 7).
